**Europäisches Patentamt**

**European Patent Office**

**Office européen des brevets**

(19)

(11) Numéro de publication : **0 467 794 A1**

(12) # DEMANDE DE BREVET EUROPEEN

(21) Numéro de dépôt : **91420219.7**

(22) Date de dépôt : **04.07.91**

(51) Int. Cl.⁵ : **B27K 7/00,** B32B 27/06

(30) Priorité : **12.07.90 FR 9009127**

(43) Date de publication de la demande :
**22.01.92 Bulletin 92/04**

(84) Etats contractants désignés :
**ES GR IT SE**

(71) Demandeur : **TARAFLEX**
**Boulevard Garibaldi**
**F-69170 Tarare (FR)**

(72) Inventeur : **Gonnu, Michel**
**31 rue Antoine de Vernoilles**
**F-69170 Tarare (FR)**
Inventeur : **Rocca, Maurice**
**14 rue Henri Forest**
**F-69170 Tarare (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

(54) **Procédé pour la réalisation de plaques (ou dalles) de liège présentant une résistance photochimique élevée.**

(57)    Procédé pour la réalisation de plaques (ou dalles) de liège présentant une résistance photochimique élevée, plaques du type constitué par une couche support en liège recouverte d'un revêtement de surface constitué par un film de PVC.

Il se caractérise en ce que :

— avant recouvrement du support en liège par le film de PVC, on effectue un traitement de blanchiment du liège, au moins superficiellement, détruisant sa coloration ;

— l'on recolore superficiellement la plaque de liège ainsi blanchie et que l'on rapporte en surface un film PVC plastifié, transparent, laissant visible le dessin de surface du liège.

EP 0 467 794 A1

La présente invention a trait à un procédé perfectionné permettant la réalisation de plaques de liège présentant une résistance photochimique élevée et qui sont couramment utilisées comme revêtements de sol, revêtements muraux ou applications similaires ; elle concerne également le nouveau type de plaques (ou dalles) obtenues à partir d'un tel procédé.

Dans la suite de la description, l'invention sera décrite plus particulièrement pour les dalles de liège utilisées en revêtements de sol, mais il est évident qu'elle pourrait également être appliquée dans le cas de plaques de moindre épaisseur, telles que celles qui sont utilisées pour réaliser des revêtements muraux.

Les dalles de liège utilisées actuellement en revêtements de sol sont, d'une manière générale, constituées essentiellement d'une couche de liège proprement dite réalisée en général à partir de granulés de liège compactés, dont l'épaisseur peut varier en fonction des applications (cette couche de liège a en général une épaisseur comprise entre un et cinq millimètres), ladite couche étant revêtue sur l'une de ses faces d'un film de surface transparent en PVC plastifié, d'épaisseur variable (entre 200 μ et 900 μ), et constituant la couche d'usure et, sur l'autre face, d'un film de sous-couche opaque, en PVC plastifié pigmenté, appelé couramment "film de contre-balancement", dont l'épaisseur est en général identique à celle du film de surface et qui a pour fonction d'apporter une symétrie en matériau nécessaire pour la planéité et la stabilité dimensionnelle des dalles, ainsi que de réaliser l'étanchéité entre l'humidité du support, notamment lorsque les dalles en liège recouvrent une chape de béton.

L'un des problèmes qui se posent avec de telles dalles, est celui de leur résistance photochimique dans le temps.

Par "résistance photochimique", au sens de la présente invention, on entend la capacité qu'a le matériau de conserver le même aspect (coloration), notamment sous l'action de la lumière solaire. Une telle caractéristique est déterminée conformément aux normes NF G 07011, NF G 07012 et NF T 51058.

Les dalles proposées à ce jour ayant la structure précité, présentent en général une résistance photochimique correspondant au virage de 3 ou au maximum de 4 de l'échelle des bleus du code européen. Par suite, une telle dégradation photochimique entraîne une modification significative de l'aspect et nuit à l'esthétique du revêtement de sol ainsi constitué.

Pour résoudre ce problème, diverses solutions ont été envisagées, solutions qui consistent soit à augmenter l'épaisseur du film PVC plastifié de surface, soit et/ou à incorporer dans ledit film un agent absorbeur d'UV.

A titre indicatif, en utilisant un film PVC plastifié ayant une épaisseur de 900 μ par rapport à un film PVC plastifié de 400 μ, il est possible d'obtenir une stabilité photochimique comprise entre le virage du 4 ou du 5 de l'échelle des bleus du code européen.

Un résultat similaire peut également être obtenu soit par addition d'un vernis concentré en absorbeur d'UV qui peut être imprimé sur la face du film PVC en contact avec le liège, soit par addition d'un agent absorbeur d'UV, par exemple un agent type benzotriazole, à une concentration de 0,5 % dans le film PVC. Si de telles améliorations sont significatives, elles sont cependant jugées très souvent insuffisantes et nuisent au développement commercial de tels produits.

Or on a trouvé, et c'est ce qui fait l'objet de la présente invention, un procédé simple, facile à mettre en oeuvre qui permet de résoudre ce problème et permet d'obtenir des plaques de liège dont la résistance photochimique se trouve nettement améliorée par rapport aux solutions antérieures et correspond au minimum au virage du 5 de l'échelle des bleus du code européen.

D'une manière générale, le procédé selon l'invention permettant la réalisation de plaques de liège présentant une résistance photochimique élevée, plaques du type constitué par une couche support en liège recouverte d'un revêtement de surface constitué par un film de PVC, se caractérise en ce que :

– avant recouvrement du support en liège par le film de PVC, on effectue un traitement de blanchiment du liège, au moins superficiellement, détruisant sa coloration ;

– que l'on recolore superficiellement la plaque de liège ainsi blanchie et que l'on rapporte en surface un film PVC plastifié, transparent, laissant visible le dessin (veinage) de surface du liège.

Selon une forme préférentielle de mise en oeuvre du procédé selon l'invention, la coloration de surface du liège blanchi est réalisée par incorporation d'une composition pigmentaire dans la formulation du film PVC plastifié, composition telle que ledit film présente une résistance photochimique intrinsèque supérieure au virage du 6 de l'échelle des bleus du code européen.

Selon une autre forme de mise en oeuvre du procédé selon l'invention, la coloration est obtenue par l'association de trois pigments : un rouge, un jaune et un noir (ou éventuellement un bleu). De plus, si une telle coloration est réalisée sur le film PVC plastifié de couverture, selon les variantes du procédé conforme à l'invention, une telle pigmentation peut eventuellement être introduite dans le liant utilisé lors du compactage des granulés pour la réalisation des plaques de liège ou être introduites dans la colle servant à associer le film PVC de surface et la plaque de liège.

Dans la suite de la description, l'invention sera illustrée par divers exemples dans lesquels la coloration est obtenue en jouant sur la composition du film PVC plastifié de surface, mais il est entendu que cela n'est nullement limitatif.

Pour la mise en oeuvre du procédé conforme à l'invention, pour réaliser l'opération préalable du blanchiment du liège, on peut faire appel aux techniques conventionnelles utilisées pour la réalisation de bouchons pour boissons. Bien entendu, pour la mise en oeuvre du procédé selon l'invention, il n'est pas nécessaire de pousser le traitement pour obtenir une blancheur aussi importante, et les problèmes organoleptiques et de sterilisation n'ont pas à être pris en considération. Parmi les différentes techniques utilisables pour réaliser le blanchiment conforme à l'invention, on peut utiliser :

a) l'exposition à un rayonnement UV :

Dans dans un tel cas, il est préférable d'opérer sur les plaques préalablement formées, puisque seule la surface de ces dernières nécessite un blanchiment.

b) l'immersion dans un bain oxydant, tel que :

– une solution d'hypochlorite de sodium,
– une solution alcaline de peroxyde d'hydrogène.

Dans un tel cas, il est préférable d'effectuer l'opération de blanchiment sur le liège en granulés, ce qui permet d'augmenter l'efficacité du traitement et facilite le sèchage. Dans ce cas, les granulés de liège sont placés, avant immersion, dans des paniers en acier inoxydable adaptables sur centrifugeuses. En effet, pour pouvoir utiliser plusieurs fois les différents bains (bains oxydants - bains de rinçage - bains de neutralisation), il est souhaitable d'effectuer une opération d'essorage entre chaque immersion. Après immersion, le séchage peut être effectué en tunnel ventilé alimenté en air chaud (40 à 60°C).

c) traitement par arrosage au moyen de solutions oxydantes, telles que celles précédemment citées en b).

Dans un tel cas, le blanchiment sera réalisé sur des plaques de liège préalablement formées ; un tel procédé entraîne cependant un contrôle strict de l'opération de séchage pour éviter la déformation des plaques.

L'opération de blanchiment peut être réalisée en choisissant l'un ou l'autre des procédés précités (éventuellement en les combinant) et ce, en fonction des impératifs de production et des avantages respectifs qu'ils apportent, le procédé de blanchiment par rayonnements U.V. n'étant pas polluant mais étant relativement coûteux du point de vue énergétique, alors qu'en revanche, un traitement par une solution d'hypochlorite est moins onéreux, mais beaucoup plus polluant.

Les trois exemples qui suivent donnent, à titre indicatif, d'une manière concrète, la façon dont peut être réalisée cette phase de blanchiment du procédé conforme à l'invention.

Exemple 1 : Blanchiment par un rayonnement U.V.

Les essais ont été réalisés dans une enceinte UV type SUNTEST de HERAUS, enceinte équipée d'une lampe Xénon avec les caractéristiques suivantes :
– puissance : 1 100 W
– éclairement : 90 Klx
– spectre : compris entre 280 et 830 nm
– éclairement énergétique entre 300 et 830 nm : 585 W/cm2.
Des échantillons de liège ont été exposés pendant respectivement 40 heures et 150 heures.
Le blanchiment obtenu après 40 heures d'exposition est suffisant pour la mise en oeuvre du procédé conforme à l'invention.

Exemple 2 : blanchiment par une solution d'hypochlorite de sodium.

On traite une plaque de liège brute avec une solution d'hypochlorite de sodium commerciale ("eau de Javel") titrant 48° chloro, soit une concentration de 12,5 % en poids en hypochlorite de sodium (NaOCl). La plaque de liège a une épaisseur de 3,5 mm et est plongée pendant trente minutes à température ambiante. Cette plaque est ensuite lavée à grande eau et immergée dans un second temps dans une solution d'acide oxalique de concentration à 0,5 mole/litre pour éliminer les traces d'hydroxyde de sodium de l'eau de Javel, susceptibles de contribuer à la dégradation du film PVC qui sera rapporté sur la plaque ainsi traitée.

Un blanchiment similaire peut être obtenu par immersion d'une plaque de liège dans une solution à 3 % en poids de NaOCl pendant une heure à température ambiante, puis rinçage à l'eau et passage dans une solution d'acide oxalique à 0,5 mole/litre.

Exemple 3 : blanchiment par une solution alcaline de peroxyde d'hydrogène ($H_2O_2$)

Pour réaliser un tel traitement, une solution commerciale d'eau oxygénée à 10 % en volume est d'abord stabilisée par addition de 1 % en poids de silicate de sodium ($Na_2O,2siO_2$), puis rendue alcaline par addition de 0,5 % en poids de soude caustique en pastilles (NaOH).

Une plaque de liège d'épaisseur 3,5 mm est plongée pendant une heure dans cette solution à température ambiante. Cette plaque est ensuite lavée à grande eau, puis neutralisée par passage dans une solution d'acide oxalique à 0,5 mole/litre.

Il convient de noter que si le blanchiment est réalisé à partir d'un tel procédé, la durée d'immersion ne doit pas être prolongée, car il se produit alors un jaunissement uniforme du liège.

Le liège ayant été ainsi blanchi, conformément au procédé, il est recouvert d'une couche de surface constituée d'un film PVC plastifié, dont la formulation est telle que :
  – d'une part, ce film présente les caractéristiques conventionnelles pour une telle application, à savoir :
    . être suffisamment transparent pour laisser paraître le décor apporté par le liège,
    . avoir une bonne résistance à l'usure ;
    . avoir une bonne résistance photochimique ;
    . avoir une bonne résistance chimique aux produits domestiques usuels ;
    . avoir une bonne résistance au tâchage provoqué par les aliments et les boissons (corps gras, alcools, café..) ;
  – et d'autre part, elle a été teinté au moyen d'une pigmentation et ce, conformément à l'invention, afin de :
    . conserver une transparence suffisante pour laisser paraître le dessin apporté par le liège,
    . reproduire la coloration du liège non blanchi ;
    . avoir une résistance photochimique supérieure ou égale au virage du 6 de l'échelle des bleus du code européen.

Comme formulation de film permettant de remplir les conditions précitées, la formulation suivante générale pourra être utilisée :

```
a) PVC - S             = 100
b) Plastifiant         = 20 à 40 pcr (*)
c) Stabilisant         = 1,5 à 3,0 pcr
d) Costabilisant       = 0,5 à 4,0 pcr
e) Lubrifiant          = 0 à 0,5 pcr
f) Pigments            = 0,05 à 0,3 %
```

(*) pcr : pour cent grammes de résine PVC, alors que les concentrations pigmentaires sont exprimées en pourcentage de formulation globale.

a) Le polymère PVC généralement utilisé est de type suspension. Sa masse moléculaire moyenne est représentée par la valeur K (ou K-wert). Le K-wert est généralement compris entre 60 et 80. Mais un mélange avec un PVC de type émulsion (PVC-E) dans un rapport 90/10 ou 80/20 peut être envisagé.

Exemples de PVC-S commerciaux = SOLVIC 264 GA et SOLVIC 275 PA de la Société SOLVIC ; EKAVYL SK 70 de la Société ATOCHEM.

Exemples de PVC-E commeciaux : SOLVIC 172 GA de la Société SOLVIC ou VESTOLIT E 6007 de la Société HULS.

b) Les plastifiants couramment utilisés sont de type phtalate : dioctyl phtalate (DOP) diisooctyl phtalate (DIOP) didécyl phtalate (DDP) ou phtalate à chaines alcools linéaires type 711 et 911. Si une ignifugation du matériau est souhaitée, l'utilisation de plastifiant de type phosphate est recommandée, par exemple le dialkyl aryl phosphate : "SANTICIZER 141 de la Société MONSANTO".

c) Les stabilisants thermiques utilisés sont des savons métalliques. Ces savons étaient généralement des sels de baryum et de cadmium, suite à l'évolution des réglementations, les savons les plus utilisés sont à ce jour des sels de baryum et de zinc.

Comme exemple de produits commerciaux : IRGASTAB BZ 555 de CIBA-GEIGY, AUSTROSTAB LBZ 8565 de CHEMSON, BAROSTAB UBZ 712 de BARLOCHER, POLYFIX A 1109 de POLYTITAN.

d) Les costabilisants utilisés sont à la fois stabilisants thermiques et stabilisants photochimiques. Les costabilisants les plus utilisés sont :
– l'huile de soja epoxydée : exemple ECEPOX PB1 de la Société PCUK ;
– le stéarate d'octyl epoxydé : exemples EDENOL ED 6 de LANKRO ou DRAPEX 3-2 de la Société ARGUS ;
– les phosphites : exemple IRGASTAB CH 300 de la Société CIBA-GEIGY ;
– les absorbeurs UV type benzotriazole ou benzophénone : exemples : TINUVIN P de la Société CIBA-GEIGY ou CYASORB UV PFF de la Société CYANAMID.

e) Les lubrifiants sont nécessaires pour la mise en oeuvre mais n'ont aucune utilité pour l'application future. En général, on utilise comme lubrifiants des acides gras (exemple : stéarine) ou des esters d'acide gras (exemples : mono di ou tristéarate de glycerol).

f) Pour réaliser la pigmentation colorée du film et remplir les conditions précitées, on utilisera une concentration et formulation de pigments, établie au moyen d'essais successifs de viellissement et dont la formulation générale est la suivante :

"EKAVYL SK 70 "     = 100
" DOP "     = 30
" DDP "     = 1, 2
"POLYFIX A 1109 "     = 2,5

Les plaques de liège utilisées ont été préalablement blanchies par une exposition de 40 h sous un rayonnement UV identique à celui dans l'exemple 1.

La coloration recherchée est obtenue par l'association de trois pigments : un rouge, un jaune et un noir.

A titre indicatif, parmi les pigments permettant d'obtenir la coloration recherchée et présentant une résistance photochimique appropriée, on peut citer la combinaison de pigments regroupés dans le tableau ci-dessous.

| REFERENCE | Fournisseur | classe chimique | Colour Index |
|---|---|---|---|
| Rouge 160 F | BAYER | Oxyde de fer synthétique | RED 101 |
| Jaune Chromophtal 2 R LTS | CIBA-GEIGY | Insoindolinone | YELLOW 110 |
| Noir Elftex | CABOT | Noir de carbone | BLACK 7 |

En fonction de l'intensité de ton recherchée, les concentrations pigmentaires exprimées en pourcentage de formulation PVC, peuvent évoluer dans les limites suivantes :
– Rouge 160 F = 0,012 à 0,048 %
– Jaune Cromophtal 2 RLTS = 0,004 à 0,016 %
– Noir Elftex = 0,03 à 0,015 %.

Le pigment noir peut également être remplacé par un bleu de phtalocyanine qui permet d'obtenir une meilleure transparence de la feuille pour des concentrations identiques. Cependant le bleu de phtalocyanine a une résistance photochimique intrinsèque inférieure à celle du noir de carbone.

Etant donné les très faibles concentrations pigmentaires utilisées, pour avoir un suivi de pigmentation correct :
– bonne dispersion dans la matrice PVC
– pas de fluctuation de dosage en cours de production.

Il est nécessaire de travailler avec des mélanges-maîtres constitués des mêmes pigments prédispersés dans un support PVC plastifié. A titre indicatif, des mélanges-maîtres tels que ceux commercialisés par la société CIBA-GEIGY sous la référence PVQ conviennent parfaitement. De tels mélanges-maîtres se présentent sous la forme de poudres micronisées facilitant la dispersion dans la matrice PVC. Les concentrations pigmentaires des mélanges-maîtres qui peuvent être utilisés sont les suivantes :

– Rouge 160 F PVQ = 60 % en rouge 160 F
– Jaune Cromophtal 2 RLTS PVQ = 20 % en Jaune cromophtal 2 RLTS
– Noir Elfex PVQ = 30 % en Noir Elfex.
Les formulations pigmentaires préalablement indiquées deviennent :
– Rouge 160 F PVQ = 0,02 à 0,08 %
– Jaune Cromophtal 2 RLTS PVQ = 0,02 à 0,08 %
– Noir Elfex PVQ = 0,01 à 0,05 % = Noir Horna 7506.

Les exemples qui suivent illustrent différents types de formulation pigmentaire convenant pour la mise en oeuvre du procédé conforme à l'invention, et mettent en évidence les conditions que doivent remplir de telles formulations.

Exemple 4 :

La formulation pigmentaire du film de surface en PVC plastifié est la suivante :
– Rouge 160 F PVQ = 0,040 %
– Jaune Cromophtal 2 RLTS PVQ = 0,032 %•
– Noir Horna 7506 = 0,030 %.
Le film PVC a une épaisseur moyenne de 400 μ. Il est appliqué sur la plaque de liège préalablement blanchi par pressage 10 mn à 140°C sous une pression de 4 bars.

Industriellement, la bonne adhérence du film PVC plastifié sur la plaque de liège est obtenue par l'utilisation d'une colle.

Le vieillissement du matériau ainsi constitué est effectué en enceinte UV identique à celle décrite dans l'exemple 1.

La résistance photochimique du matériau correspond au virage du 5 de l'échelle des bleus du code européen.

On constate donc que pour que le coloris ait une résistance photochimique suffisante, qu'une concentration minimale pigmentaire est nécessaire.

Exemple 5 :

La formulation pigmentaire est la suivante :
– Rouge 160 F PVQ = 0,015 %
– Jaune Cromophtal 2 RLTS PVQ = 0,010 %
– Noir Horna 7506 = 0,045 %.
La plaque de matériau est réalisée dans des conditions identiques à celles de l'exemple 4.

La résistance photochimique du matériau correspond au virage du 4 de l'échelle des bleus du code européen. Il est à noter que, malgré l'évolution de coloris constatée, le contraste est moins important que pour un matériau standard où le blanchiment du liège intervient. Dans le cas d'une surface pigmentée, il y a diminution de l'intensité du ton mais conservation d'une couleur "liège".

La résistance photochimique maximale est obtenue par un blanchiment total du liège. Dans ce cas, les concentrations pigmentaires utilisées pour retrouver la couleur initiale du liège sont plus importantes et la résistance photochimique du film de surface augmente.

Exemple 6 :

Une plaque de liège est parfaitement blanchie par une exposition de 150 heures en enceinte UV type SUNTEST.

La formulation pigmentaire utilisée pour un film PVC plastifié d'épaisseur moyenne 400 μ est la suivante :
– Rouge 160 F PVQ = 0,052 %
– Jaune Cromophtal 2 RLTS PVQ = 0,042 %
– Noir Horna 7506 = 0,040 %.
La résistance photochimique du matériau correspond au virage du 6 de l'échelle des bleus du code européen.

Ce type d'exemple montre qu'une diminution de l'épaisseur du film PVC plastifié permet une augmentation de la concentration pigmentaire sans changer la couleur finale du matériau.

Exemple 7

Pour application sur un liège blanchi par une exposition de 40 h en enceinte UV type SUNTEST, avec un film PVC plastifié d'épaisseur moyenne 250 μ, la concentration pigmentaire suivante a été utilisée :
- Rouge 160 F PVQ = 0,064 %
- Jaune Chromophtal 2 RLTS PVQ = 0,050 %
- Noir Horna 7506 = 0,048 %.

La résistance photochimique d'un tel matériau correspond au virage du 6 de l'échelle des bleus du code européen.

Les exemples qui précèdent montrent les avantages apportés par le procédé conforme à l'invention, et notamment le fait que l'on obtient une très bonne résistance photochimique du liège.

Bien entendu, l'invention n'est pas limitée aux exemples donnés précédemment, mais elle en couvre toutes les variantes réalisées dans le même esprit, la coloration pigmentaire pouvant, comme indiqué précédemment, être réalisée éventuellement en l'introduisant dans le liant utilisé pour le compactage des granulés lors de la réalisation des plaques de liège, voire même en introduisant à l'intérieur de la colle servant à associer le film PVC de surface à la plaque de liège.

**Revendications**

1/ Procédé pour la réalisation de plaques (ou dalles) de liège présentant une résistance photochimique élevée, plaques du type constitué par une couche support en liège recouverte d'un revêtement de surface constitué par un film de PVC, caractérisé en ce que :
- avant recouvrement du support en liège par le film de PVC, on effectue un traitement de blanchiment du liège, au moins superficiellement, détruisant sa coloration;
- l'on recolore superficiellement la plaque de liège ainsi blanchie et que l'on rapporte en surface un film PVC plastifié, transparent, laissant visible le dessin de surface du liège.

2/ Procédé selon la revendication 1, caractérisé en ce que la coloration de surface du liège blanchi est réalisée à partir d'une composition pigmentaire présentant une résistance photochimique intrinsèque supérieure au virage du 6 de l'échelle des bleus du code européen, cette composition pigmentaire étant à base de trois pigments : un rouge, un jaune et un noir (ou éventuellement un bleu).

3/ Procédé selon la revendication 2, caractérisé par le fait que la coloration pigmentaire est incorporée à l'intérieur de la formulation du film PVC plastifié.

4/ Procédé selon la revendication 2, caractérisé en ce que la coloration est réalisée par pigmentation introduite dans le liant utilisé lors du compactage des granulés pour la réalisation des plaques de liège.

5/ Procédé selon la revendication 2, caractérisé en ce que la coloration est réalisée par incorporation de la composition pigmentaire à l'intérieur de la colle servant à associer le film PVC de surface à la plaque de liège.

6/ Procédé selon l'une des revendications 1 à 5, caractérisé en ce que le blanchiment préalable du liège est réalisé par exposition à un rayonnement U.V. ou immersion ou arrosage au moyen de solutions oxydantes.

EP 0 467 794 A1

Office européen
des brevets

**RAPPORT DE RECHERCHE EUROPEENNE**

Numero de la demande

EP 91 42 0219

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 637 833 (SOBERANA CORTICEIRA LDA) <br> * Page 1, lignes 11-21; page 2, lignes 7-12,23-35; page 3, lignes 7-10; page 4, lignes 9-11 * <br> --- | 1,3,5,6 | B 27 K 7/00 <br> B 32 B 27/06 |
| Y | GB-A-2 020 227 (P L P S.r.l. PLAST LAMINO PRESS) <br> * Page 1, lignes 19-33,70-77,111-120 * <br> --- | 1,3,6 | |
| Y | FR-A-1 396 460 (COMPAGNIE DE SAINT-GOBAIN) <br> * Page 1, colonne de gauche, lignes 1-20; page 1, colonne de droite, lignes 13-33 * <br> --- | 1,5,6 | |
| A | FR-A-1 139 848 (M.-J.-P. BOUSTOURRE) <br> * Document entier * <br> ----- | 1,4 | |

**DOMAINES TECHNIQUES RECHERCHES (Int. Cl.5)**

B 27 K
B 32 B

Le présent rapport a été établi pour toutes les revendications

| Lieu de la recherche | Date d'achèvement de la recherche | Examinateur |
|---|---|---|
| LA HAYE | 22-10-1991 | DALKAFOUKI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8